# EUROPEAN PATENT APPLICATION

(11) **EP 4 625 163 A1**
(43) Date of publication of application: **01.10.2025**
(21) Application number: 25164164.3
(22) Date of filing: 17.03.2025
(51) Int. Cl.: G06F 9/451, G06N 20/00, G06F 3/0481

(54) **SMART APPLICATION WINDOW LAYOUTS**

(30) Priority: 29.03.2024 US 202418622595
(71) Applicant: Microsoft Technology Licensing, LLC, Redmond, WA 98052 (US)
(72) Inventor: SONG, SAMANTHA MADELINE HAELENE, Redmond, 98052 (US); SEPULVEDA VARON, JUAN S., Redmond, 98052 (US); SHAH, NIHAR NIRANJAN, Redmond, 98052 (US); HUANG, EMILY, Redmond, 98052 (US); KARMAN, ROBERT, Redmond, 98052 (US); FANG, ETHAN YI-SEN, Redmond, 98052 (US); PADDOCK, BRANDON, Redmond, 98052 (US)
(74) Representative: CMS Cameron McKenna Nabarro Olswang LLP

(57) **Abstract**

Provided are systems and methods for implementing smart window layout functionalities. In various examples, a computing system may be used to identify a first window layout of a plurality of application windows for display within at least one display screen of corresponding at least one display device. The computing system may display the plurality of application windows within the at least one display screen, based on the first window layout, without receiving, from a user, user input manually changing any of sizes, positions, or levels of zoom of any individual application windows being displayed. The computing system utilizes an artificial intelligence "AI" system and a machine learning "ML" model to perform the identification of the first window layout, and, in some cases, changes the size, position, and/or level of zoom of one or more application windows from an initial layout state based on the first window layout.

## Description

### BACKGROUND

Manually arranging applications can be time consuming, especially for users who frequently switch between workflows, monitors, and screen sizes. Such changes in workflows interrupt productivity, making it difficult to continue or begin multitasking. It is with respect to this general technical environment to which aspects of the present disclosure are directed. In addition, although relatively specific problems have been discussed, it should be understood that the examples should not be limited to solving the specific problems identified in the background.

### SUMMARY

This summary is provided to introduce a selection of concepts in a simplified form that are further described below in the detailed description section. This summary is not intended to identify key features or essential features of the claimed subject matter, nor is it intended as an aid in determining the scope of the claimed subject matter.

The currently disclosed technology, among other things, provides smart window layout functionalities. A computing system, in some cases using an artificial intelligence ("AI") system, implements smart window layouts, thereby reducing the number of actions a user would take to manually size (or re-size) and position (or re-position) the user's application windows. The system leverages a robust machine learning ("ML") model to incorporate meaningful desktop characteristics including available screen real-estate, cross-application relationships and/or usage, predicted user-intent, and past user windows usage to inform the positioning of application windows being launched and, if applicable, the re-positioning of currently open application windows.

The details of one or more aspects are set forth in the accompanying drawings and description below. Other features and advantages will be apparent from a reading of the following detailed description and a review of the associated drawings. It is to be understood that the following detailed description is explanatory only and is not restrictive of the invention as claimed.

### BRIEF DESCRIPTION OF THE DRAWINGS

A further understanding of the nature and advantages of particular embodiments may be realized by reference to the remaining portions of the specification and the drawings, which are incorporated in and constitute a part of this disclosure.
Fig. 1 depicts an example system for implementing smart window layout functionalities.
Figs. 2A-2D depict an example set of smart window layouts that may be displayed when implementing smart window layout functionalities.
Fig. 3 depicts an example transition from a current window layout to an optimized or preferred window layout that may be identified when implementing smart window layout functionalities.
Figs. 4A-4I depict various example methods for implementing smart window layout functionalities.
Fig. 5 depicts a block diagram illustrating example physical components of a computing device with which aspects of the technology may be practiced.

### DETAILED DESCRIPTION OF CERTAIN EMBODIMENTS

Switching between workflows, monitors, and screen sizes can result in a need to rearrange, restore, or otherwise change layout, positions, and/or sizes of displayed application windows. Further, manually arranging application windows can be time consuming and can interrupt productivity as well as waste computing resources in processing the input/output commands related to the manual rearrangement.

The technology described herein, in some examples, provides a system of applied-intelligence to implementing application window launching and window layout that leverages a robust ML model to incorporate meaningful desktop characteristics including available screen real-estate, cross-application relationships and/or usage, predicted user-intent, and past user windows usage to inform the positioning of application windows being launched and, if applicable, the re-positioning of currently open application windows.

Various modifications and additions can be made to the embodiments discussed herein without departing from the scope of the disclosed techniques. For example, while the embodiments described above refer to particular features, the scope of the disclosed techniques also includes embodiments having different combinations of features and embodiments that do not include all of the above-described features.

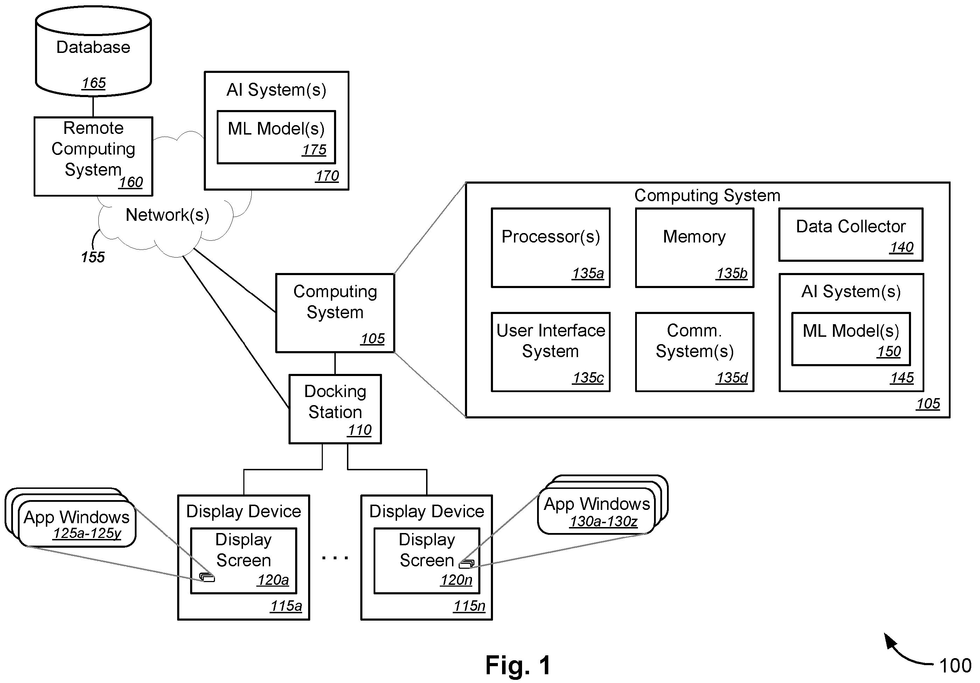

We now turn to the embodiments as illustrated by the drawings. Figs. 1-5 illustrate some of the features of methods, systems, and apparatuses for implementing user experience functionalities, and, more particularly, to methods, systems, and apparatuses for implementing smart window layout functionalities, as referred to above. The methods, systems, and apparatuses illustrated by Figs. 1-5 refer to examples of different embodiments that include various components and steps, which can be considered alternatives or which can be used in conjunction with one another in the various embodiments. The description of the illustrated methods, systems, and apparatuses shown in Figs. 1-5 is provided for purposes of illustration and should not be considered to limit the scope of the different embodiments.

Fig. 1 depicts an example system 100 for implementing smart window layout functionalities. System 100 includes computing system 105, docking station 110, and one or more display devices 115a-115n (collectively, "display devices 115"), the one or more display devices 115a-115n having corresponding display screens 120a-120n (collectively, "display screens 120"). Displayed on display screen(s) 120a-120n may be application windows 125a-125y or 130a-130z (collectively, "application windows 125" or "application windows 130"). Herein, *n, y,* and *z* are non-negative integer numbers that may be either all the same as each other, all different from each other, or some combination of same and different (e.g., one set of two or more having the same values with the others having different values, a plurality of sets of two or more having the same value with the others having different values).

In examples, computing system 105 may include processor(s) 135a, memory 135b, user interface ("UI") system 135c, and communications system(s) 135d. In some examples, computing system 105 may further include data collector 140 and/or AI system 145, which may be based on one or more ML models 150. In examples, computing system 105 is any suitable computing device including a desktop computer, a laptop computer, or a tablet computer. For some computing devices (e.g., the laptop computer or a tablet computer), the docking station 110 may be an external device that allows the computing device to dock or connect, enabling power connections and wired connection to the one or more display devices 115. For other computing devices (e.g., the desktop computer), the docking station 110 may be integrated with or disposed within the computing device (or eliminated and internal components of the computing device utilized for connection to the external components).

In some instances, the display devices 115 each include a computer monitor, a television, or a projector-based display device. In some cases, the display screen 120 of each display device 115 may include a touchscreen display or a non-touchscreen display, and may have any suitable screen size and/or screen resolution. While the display devices 115 are generally depicted as being separate from the computing system 105, one or more of the display devices 115 may be integrated with the computing system 105. In examples, application windows 125 and/or 130 include windows of any suitable software applications including word processing applications, spreadsheet applications, note taking applications, drawing applications, presentation applications, email applications, chat messaging applications, web browser applications, teleconferencing among other applications.

In some examples, the AI system(s) 145 includes generative AI and/or ML models such as small language models ("SLMs"), large language models ("LLMs"), or other language models. Alternatively or additionally, the AI system(s) 145 includes other ML models that are non-LLM models or non-language models, the other ML models including convolutional neural networks ("CNNs"), recurrent neural networks ("RNNs"), deep neural networks ("DNNs"), transformers, and/or long short-term memory networks ("LSTMs"). As used herein, an LLM refers to a machine learning model that is trained and fine-tuned on a large corpus of media (e.g., text, audio, video, or software code), and that can be accessed and used through an application programming interface ("API") or a platform. An SLM is similar to an LLM, except that it has fewer parameters and requires less data and time to be trained. An SLM and an LLM each performs a variety of tasks, including generating and classifying media, answering user requests and questions in a conversational manner, and translating text from one language to another. Examples of LLMs (or more generally language models ("LMs")) include Bidirectional Encoder Representations from Transformers ("BERT"), Word2Vec, Global and Vectors ("GloVe"), Embeddings from Language Models ("ELMo"), XLNet, Generative Pre-trained Transformer ("GPT")-3 or GPT-4, Large Language Model Meta AI ("LLaMA") 2, or BigScience Large Open-science Open-access Multilingual Language Model (BLOOM). In examples, the other ML models include multimodal models that are capable of either one or more of text, image, audio, or video as both input and output, or using one or a first combination of text, image, audio, and/or video as input and using another or a second combination of text, image, audio, and/or video as output. Examples of multimodal models include GPT-4 (which can use both text and image as inputs), LLaMA 2 (which allows for image and video inputs), or Gemini (which was designed to process text, images, audio, video, and computer code).

Network(s) 155 may each include at least one of a distributed computing network, such as the Internet, a private network, a commercial network, or a cloud network, and/or the like. System 100 further includes remote computing system 160 and corresponding database 165. System 100 further includes AI system(s) 170, including ML model(s) 175. In examples, remote computing system 160 is similar to computing system 105, in some cases, with or without data collector 140 or AI system(s) 145. AI system(s) 170 and ML model(s) 175 may be similar to AI system(s) 145 and ML model(s) 150.

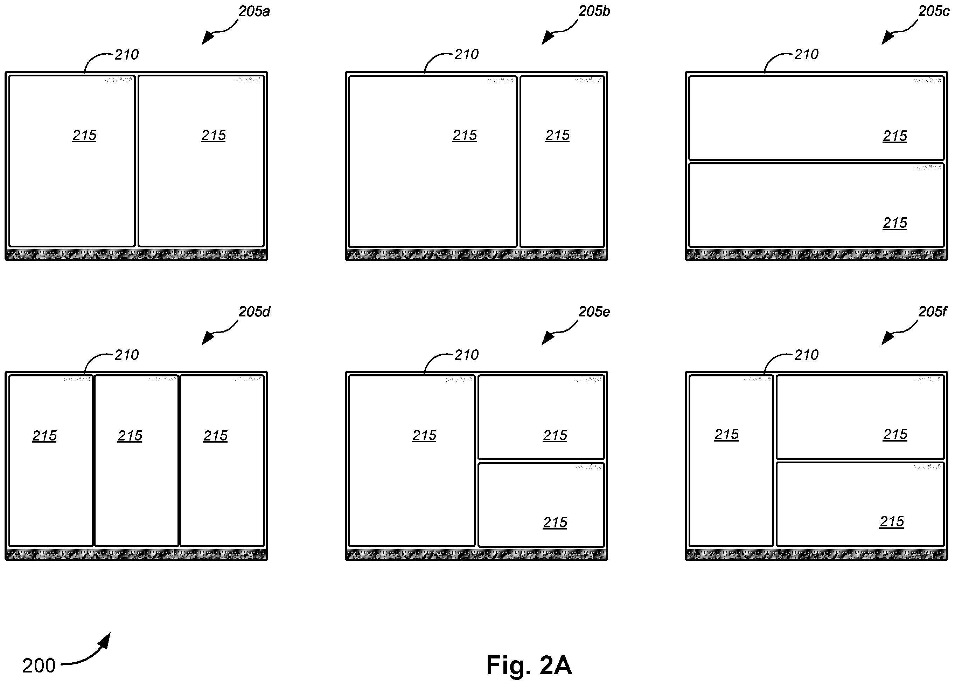

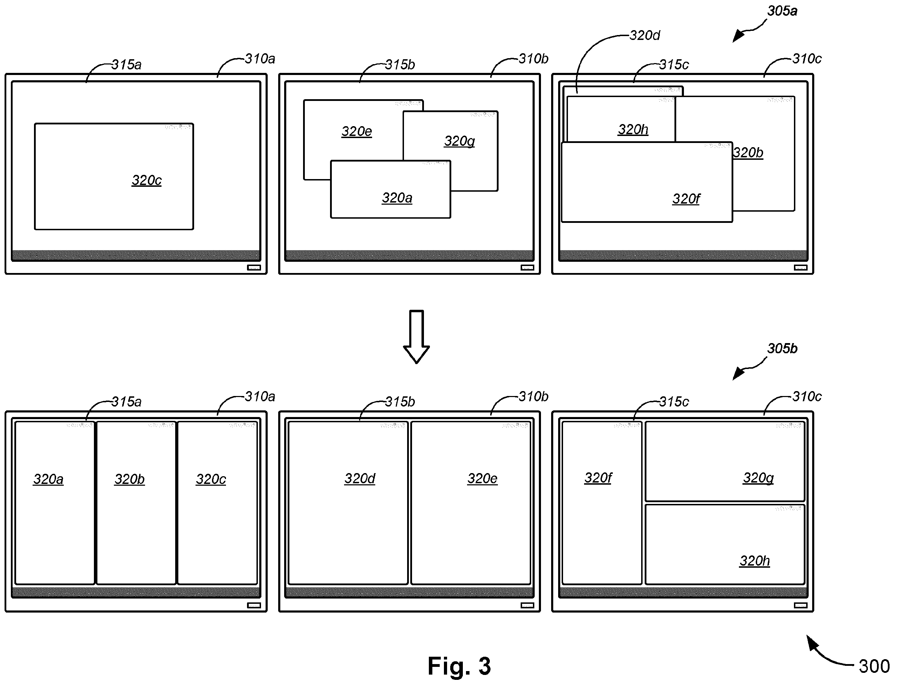

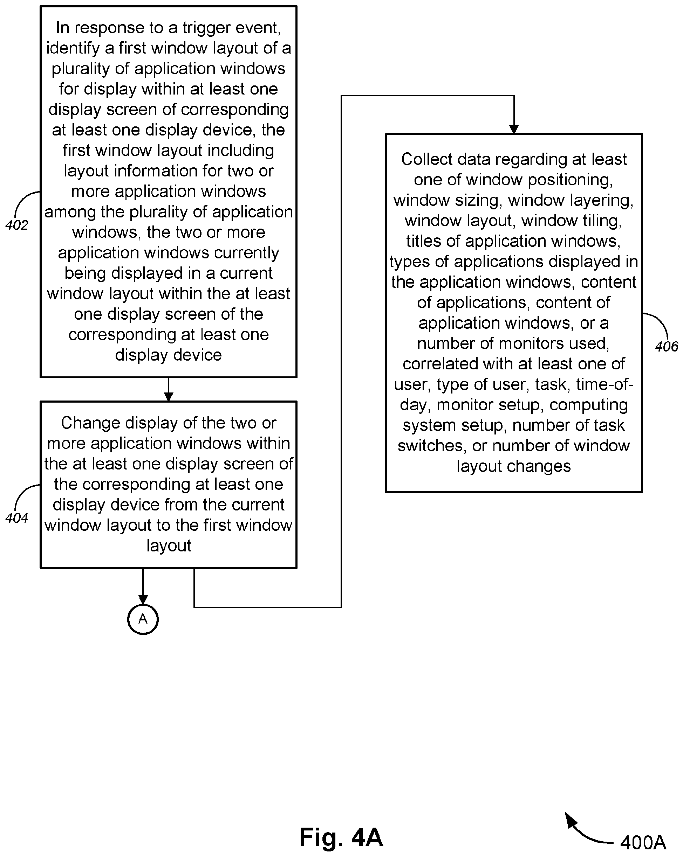

In operation, computing system 105, remote computing system 160, and/or AI system(s) 145 or 170 may perform methods for implementing smart window layout functionalities, as described in detail with respect to Figs. 2A-4I. For example, an example set 200 of smart window layouts 205a-205x as described below with respect to Figs. 2A-2D, an example transition 300 as described below with respect to Fig. 3, and example methods 400A-400F as described below with respect to Figs. 4A-4I may be applied with respect to the operations of system 100 of Fig. 1.

Figs. 2A-2D depict an example set 200 of smart window layouts 205a-205x that may be displayed when implementing smart window layout functionalities. In Figs. 2A-2D, each of smart window layouts 205a-205x are shown with respect to layouts of two or more application windows 215 that are displayed within display screen 210 of a display device. Example smart window layout 205a-205c depict two application windows 215 arranged in various layouts with various window sizes and positions. For example, two snapped or tiled application windows 215 of equal size and vertically arranged side-by-side are as shown, e.g., in smart window layout 205a. Two snapped or tiled application windows 215 of different sizes and vertically arranged side-by-side are as shown, e.g., in smart window layout 205b. Two snapped or tiled application windows 215 of equal size and horizontally arranged one above the other are as shown, e.g., in smart window layout 205c.

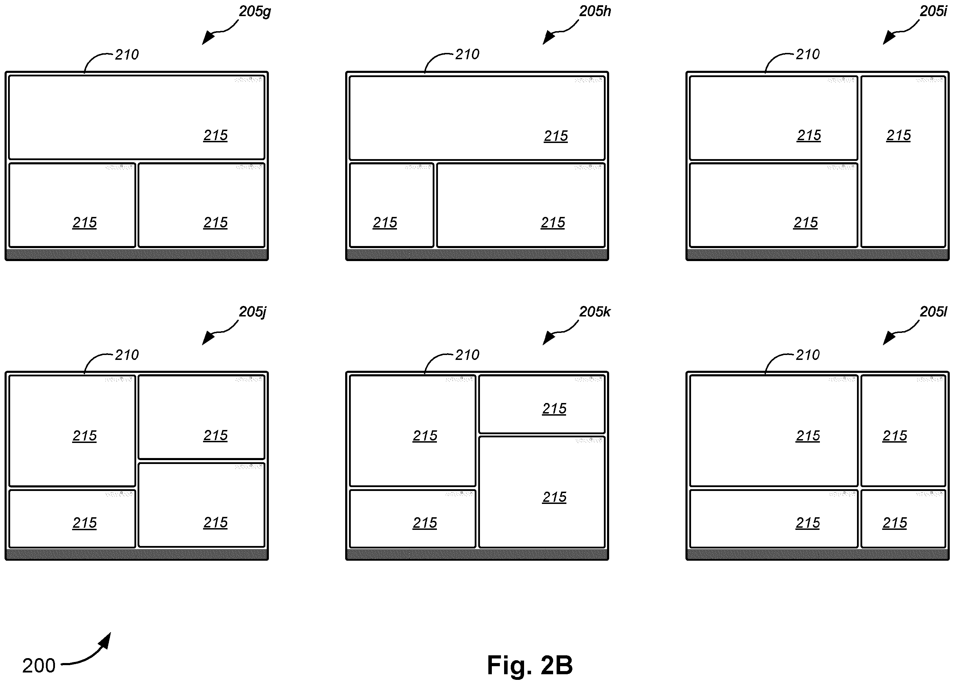

Example smart window layouts 205d-205i depict three application windows 215 arranged in various layouts with various window sizes and positions. For example, three snapped or tiled application windows 215 of equal size and vertically arranged side-by-side are as shown, e.g., in smart window layout 205d. Three snapped or tiled application windows 215 of different sizes, one vertically arranged and sized to fit the left half of the display screen 210 and two horizontally arranged one above the other and sized to fit the right half of the display screen 210 are as shown, e.g., in smart window layout 205e. Three snapped or tiled application windows 215 of different sizes, one vertically arranged and sized to fit the left third of the display screen 210 and two horizontally arranged one above the other and sized to fit the right two-thirds of the display screen 210 are as shown, e.g., in smart window layout 205f. Referring to Fig. 2B, three snapped or tiled application windows 215 of different sizes, one horizontally arranged over two of equal size that are vertically arranged side-by-side are as shown, e.g., in smart window layout 205g. Three snapped or tiled application windows 215 of different sizes, one horizontally arranged over two of different size that are vertically arranged side-by-side (one sized at one third the width, the second sized at two-thirds the width) are as shown, e.g., in smart window layout 205h. Three snapped or tiled application windows 215 of different sizes, one vertically arranged and sized to fit the right third of the display screen 210 and two horizontally arranged one above the other and sized to fit the left two-thirds of the display screen 210 are as shown, e.g., in smart window layout 205i.

Example smart window layouts 205j-205r depict four application windows 215 arranged in various layouts with various window sizes and positions. For example, four snapped or tiled application windows of different size, all of equal width (e.g., about half the width of display device 210) with the top left being about two-thirds the height of display device 210, the bottom left being about one-third the height, and two of equal size one over the other on the right half are as shown, e.g., in smart window layout 205j. Four snapped or tiled application windows of different size, all of equal width (e.g., about half the width of display device 210) with the top left being about two-thirds the height of display device 210, the bottom left being about one-third the height, the bottom right being about two-thirds the height of display device 210, the bottom left being about one-third the height, are as shown, e.g., in smart window layout 205k. Four snapped or tiled application windows of different size, with the top left being about two-thirds the height and about two-thirds the width of display device 210, the bottom left being about one-third the height and about two-thirds the width, the top right being about two-thirds the height and about one-third the width of display device 210, the bottom right being about one-third the height and about one-third the height are as shown, e.g., in smart window layout 2051.

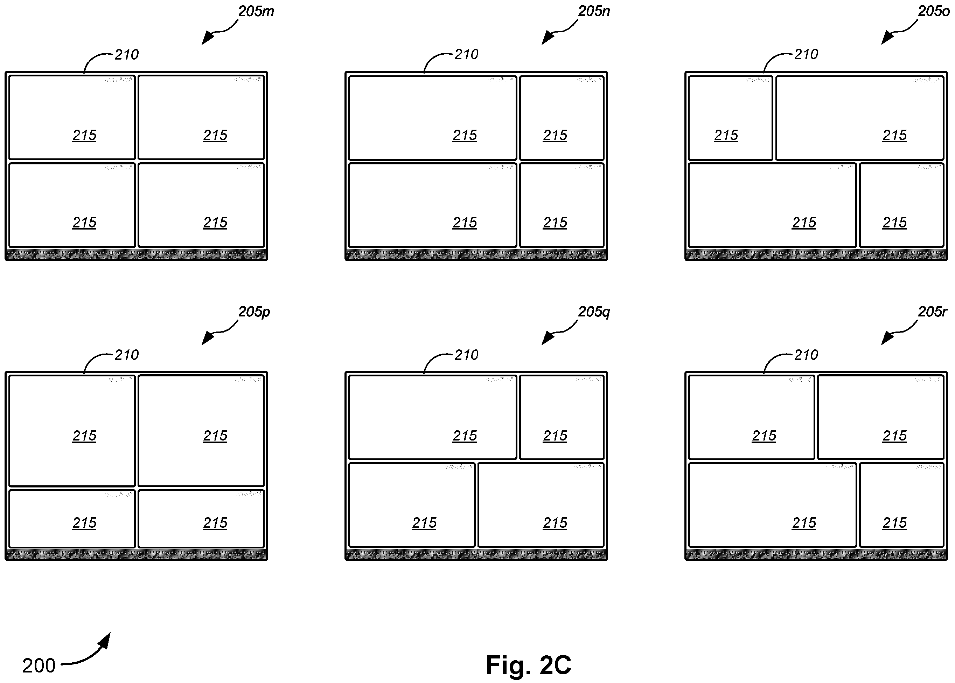

Turning to Fig. 2C, four snapped or tiled application windows 215 of equal size and arranged across the four quadrants of the display screen 210 are as shown, e.g., in smart window layout 205m. Four snapped or tiled application windows of different size, all of equal height (e.g., about half the height of display device 210) with the left two being about two-thirds the width of display device 210 and arranged one over the other, the right two being about one-third the width of display device 210 and arranged one over the other, are as shown, e.g., in smart window layout 205n. Four snapped or tiled application windows of different size, all of equal height (e.g., about half the height of display device 210) with the top right and the bottom left two being about two-thirds the width of display device 210 and arranged one over the other in a staggered manner, the top left and the bottom right being about one-third the width of display device 210 are as shown, e.g., in smart window layout 205o. Four snapped or tiled application windows of different size, all of equal width (e.g., about half the width of display device 210) with the top two being about two-thirds the height of display device 210 and arranged side-by-side, the bottom two being about one-third the height of display device 210 and arranged side-by-side, are as shown, e.g., in smart window layout 205p. Four snapped or tiled application windows of different size, all of equal height (e.g., about half the height of display device 210) with the top left being about two-thirds the width of display device 210, the top right being about one-third the width, and the bottom two being of equal width and arranged side-by-side are as shown, e.g., in smart window layout 205q. Four snapped or tiled application windows of different size, all of equal height (e.g., about half the height of display device 210) with the bottom left being about two-thirds the width of display device 210, the bottom right being about one-third the width, and the top two being of equal width and arranged side-by-side are as shown, e.g., in smart window layout 205r.

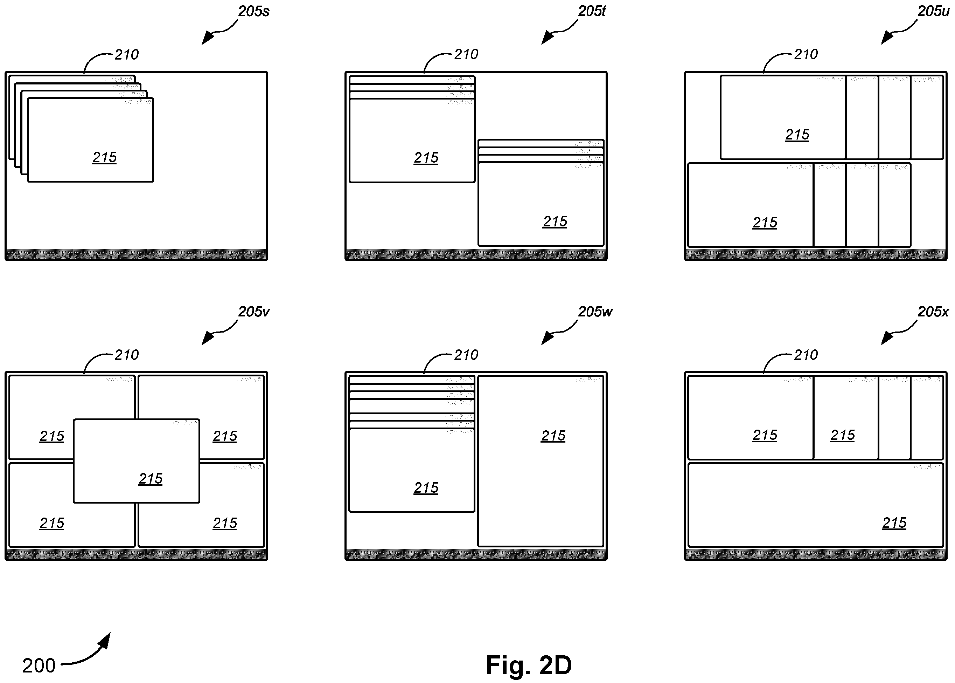

With reference to Fig. 2D, example smart window layouts 205s-205x depict overlapping application windows 215. For example, cascaded multiple application windows 215 and positioned at or near the top left corner of the display screen 210 are as shown, e.g., in smart window layout 205s. Two stacks of multiple application windows 215 with one stack being positioned at or near the top left corner of the display screen 210 and the other stack being positioned at or near the bottom right corner are as shown, e.g., in smart window layout 205t. Two layered piles of multiple application windows 215 with one layered pile being positioned at or near the bottom left corner of the display screen 210 and the other layered pile being positioned at or near the top right corner are as shown, e.g., in smart window layout 205u. Five equal sized application windows 215 are shown, e.g., in smart window layout 205v, with one being overlayed over the other four, which are positioned at the four quadrants of the display screen 210. A stack of multiple application windows 215 that is positioned at or near the top left corner of the display screen is shown side-by-side with an expanded application window 215 from its stack that is positioned and sized to fit the right half of the display screen are as shown, e.g., in smart window layout 205w. A layered group of multiple application windows 215 that is positioned on the top half of the display screen is shown over with an expanded application window 215 from its group that is positioned and sized to fit the bottom half of the display screen are as shown, e.g., in smart window layout 205x.

Although particular example smart window layouts 205a-205x are shown in Figs. 2A-2D, the various examples are not so limited, and any suitable layout of application windows may be implemented based on analysis of use, user selection, or other factors for optimization of layout.

Fig. 3 depicts an example transition 300 from a current window layout to an optimized or preferred window layout that may be identified when implementing smart window layout functionalities. In Fig. 3, an initial (or current) window layout 305a involves a three-monitor setup with monitors (or display devices) 310a-310c and application windows 320a-320h each being displayed in one of the display screens 315a-315c corresponding to the three monitors 310a-310c. As shown in the top portion of Fig. 3, application windows 320a-320h are irregularly or randomly positioned and displayed throughout the three display screens 315a-315c and are of varying (and random) sizes.

In response to a trigger event(s), as described below with respect to Figs. 4A-4I, the computing system (in some cases, using an AI system(s) and one or more AI or ML models) identifies optimized or preferred layouts of the application windows (such as depicted by window layout 305b in Fig. 3 that may include layouts of application windows 320, e.g., as shown and described above with respect to smart window layouts 205d, 205a, and 205f of Fig. 2A. which may be based on one or more factors. In examples, the factors may include at least one of a user identifier, a type of user, a user task, a number of display devices among the at least one display device, a size of display screen for each display device, and/or a number of application windows. In some cases, the type of user includes one of a sophisticated, expert, or high confidence computer user; an intermediate or medium confidence computer user; or a novice or low confidence computer user. In some instances, the user task includes one of a work task, an entertainment task, a gaming task, a search engine task, etc.

In some examples, the AI system(s) may train, optimize, or reinforce a local AI or ML model (e.g., an AI or ML model operating locally on the computing device) using user-specific data or app-specific data including topics, subjects, domains, and/or other content that may be extracted from the application windows, the underlying applications, or corresponding task lists or schedules. In some aspects, a local training loop is used where a base model is deployed to the computing device, user behavior data is collected locally, and the model is retrained locally (on the computing device) to optimize for local user behavior, thus making the model unique to other models and eliminating or reducing the need for user data to leave the device for purposes of training the model. In this manner, use of a local model helps ensure data security and data privacy of local data that is used to train the model. Once trained, however, the local model may be copied or otherwise used in a network or at a different location by other computing devices. For instance, the locally trained and user-specific model may be uploaded to a remote storage location. When the user accesses a new or different computing device, the user-specific model may be downloaded onto the new or different computing device and then executed to provide substantially the same customized smart windowing experience on the new device.

In examples, simpler ML models may be chained with SLMs or LLMs. For example, an LLM/ML combination or chain may be used in which the LLM can be used to process natural language of the content within the application windows to provide insights and/or to determine the topics or features. The output from the LLM is then used as training data or input data for the simpler ML model. Effectively, the LLM is used to provide richer context signals regarding the content currently being displayed. The ML model then generates the window layout (or windowing) suggestions. In another example, an ML/LLM combination or chain may be used in which the ML model is first used to generate the preferences for the user in the current context or generally (e.g., the user prefers or likes application windows that are equally displayed across the display screen(s)). The output of preferences or recommendations from the ML model is then incorporated into a prompt to the LLM to request window layout (or windowing) suggestions for the current context. This chain is a more computationally efficient system that can be used instead of having to finetune the LLM itself, which is resource intensive and likely would not have enough data from each user to perform a meaningful change to the LLM. Yet, the chain enables the LLM to appear to be unique to the user. In yet another example, an LLM itself may be used for providing window layout (or windowing) suggestions. This approach allows for natural language requests to be incorporated. For example, a prompt such as the following may be used: "Computer, I need to do my taxes, please arrange my windows for that task." Either the computer provides windowing suggestions (such as those examples shown in Figs. 2A-2D) and selects one window layout, or the user selects the window layout from the provided windowing suggestions.

In some aspects, the computing system automatically suggests window layouts by leveraging data about user workflow patterns, to recommend a context-based launch to a frequently used layout(s). The computing system may also enable pinning and restoration of layouts, and may enable users to easily pin multiple, manually-created window layouts for quick restoration at a later time. The computing system may further enable quick start up, by allowing users to rapidly open a number of applications relevant to their workflow and then allowing the system intelligence (e.g., via the AI system(s)) to handle positioning decisions. The computing system may also be used for docking and undocking situations and/or to handle positioning fixes associated with changes to screen size and/or resolution and the number of available screens.

As an initial or one of the initial steps, the computing system, in some examples, captures user data and aggregates user data for improving model accuracy and validating benefit to users. The computing system performs pre-processing, which may include assigning capture identifiers ("IDs"), encoding for unique string IDs, and/or re-formatting data types. The computing system may update statistics, by appending relevant metrics to rolling data statistics that assign weights to positioning recommendations. The computing system then invokes the model by calling the AI system to reposition relevant applications using capture data as input. In examples, layout selection, layout population, and/or layout adjustments may be used to improve intelligence of the model. In some cases, layout selection may be based on a number of applications, a number of minimized application windows, a number of maximized application windows, a number of normal or floating applications, a number of display screens, a size of available display screens, and/or frequently used layouts. In some instances, layout population may be based on z-order (or layering order) of overlapping application windows, previous interactions with other applications windows, average size of application windows, average aspect ratio, size flexibility, aspect ratio flexibility, and/or frequently used positions. In some examples, layout adjustments may be based on minimum application window size, maximum application window size, size flexibility prioritization, user adjustment of previous layout recommendations, time spend in layout state, application window swaps, and/or gutters.

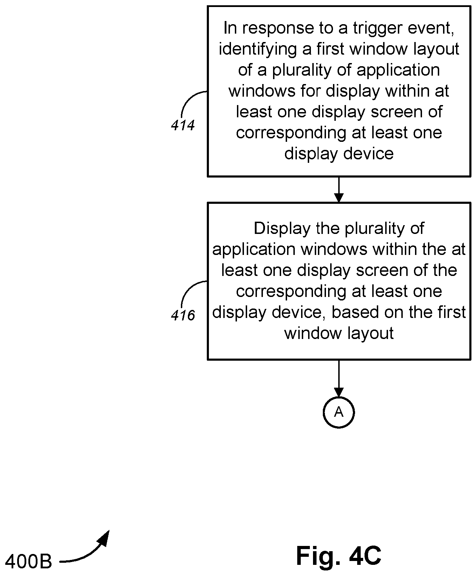

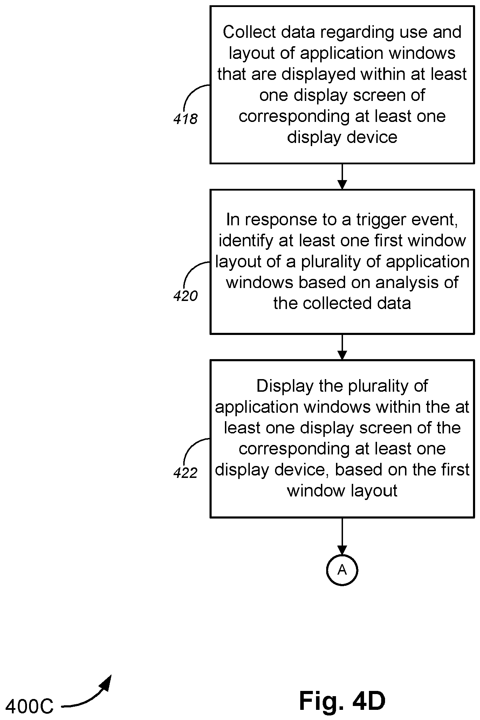

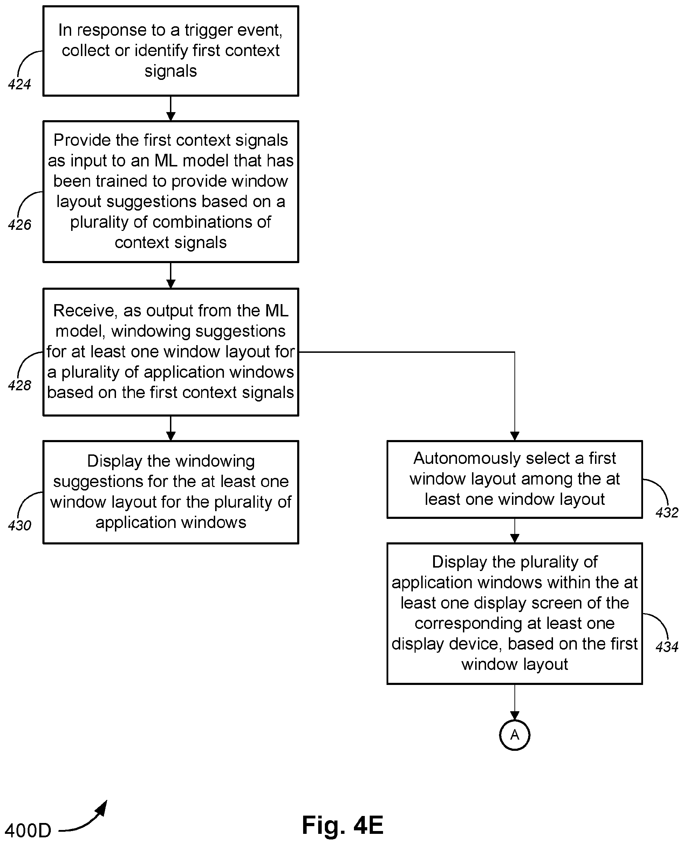

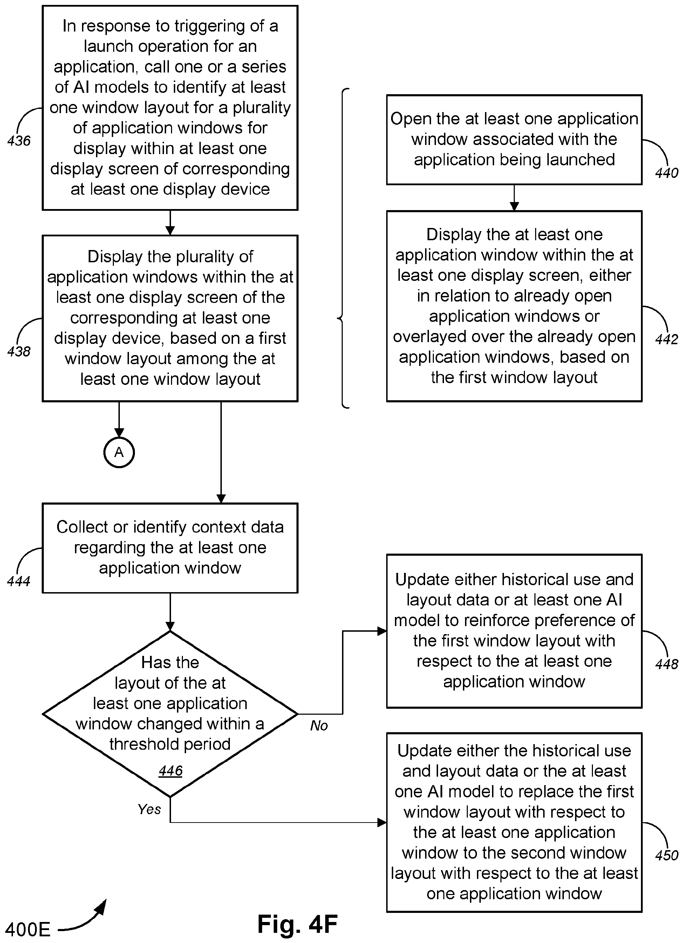

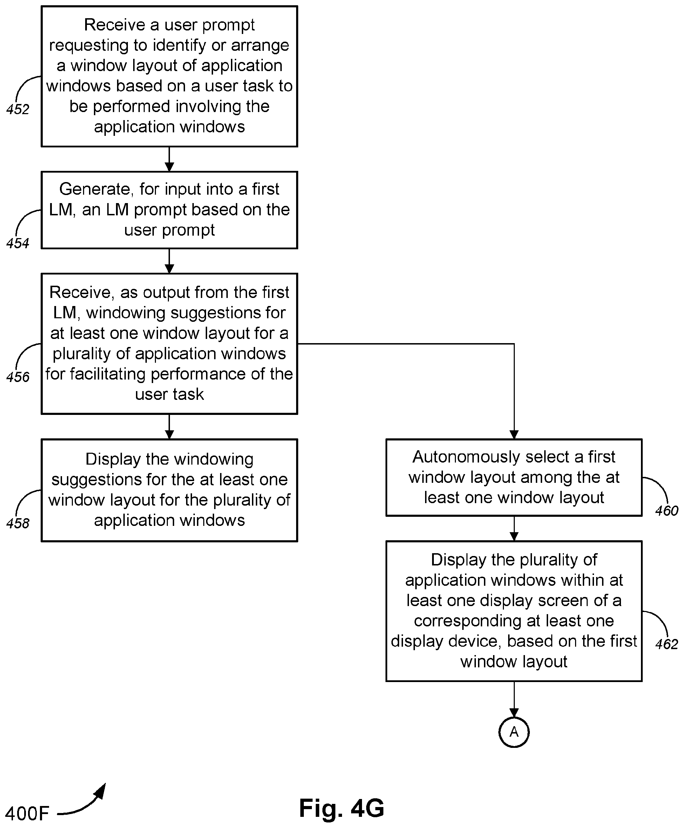

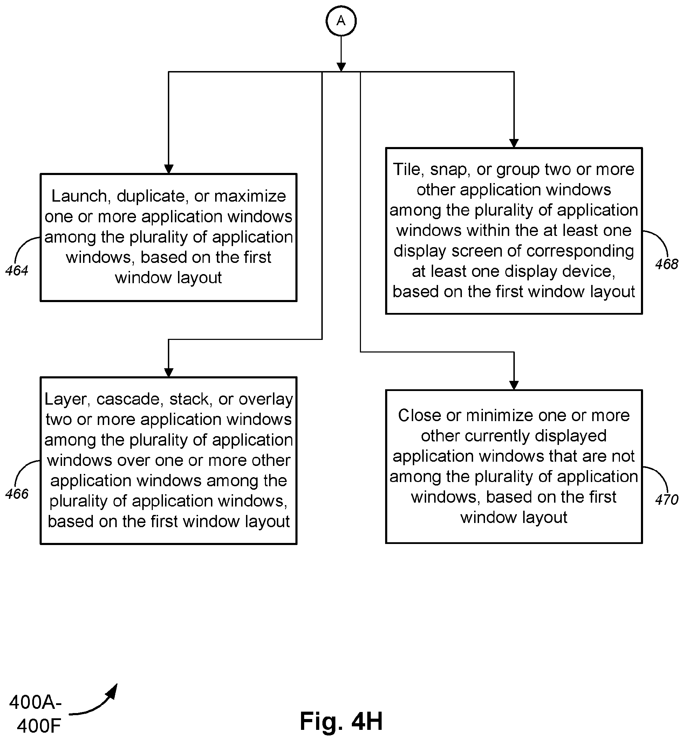

Figs. 4A-4I depict various example methods 400A-400F for implementing smart window layout functionalities. Each of methods 400A-400F continues from Figs. 4A, 4C, 4D, 4E, 4F, and 4G, respectively, onto Fig. 4H following the circular marker denoted, "A." The operations of methods 400A-400F may be performed by one or more computing devices, such as the devices discussed in the various systems above. In some examples, the operations of method 400A-400F are performed by the computing device operating as the computing system (e.g., computing system 105, remote computing system 160, or AI system(s) 145 or 170 of Fig. 1). In addition to predicting user patterns for windowing behaviors and using the predictions to suggest window layouts, the techniques described herein also expand to laying out floating/overlapping application windows and using AI to layout application windows in different ways. In some cases, heuristics, context signals, collected data (e.g., historical use data and/or historical layout data), and/or the like may be used to inform the identification of window layouts, as described below.

At operation 402, a computing system, in response to a trigger event, identifies a first window layout of a plurality of application windows for display within at least one display screen of corresponding at least one display device. In an example, the first window layout includes layout information for two or more application windows among the plurality of application windows. In examples, the two or more application windows are currently displayed in a current window layout within the at least one display screen of the corresponding at least one display device. At operation 404, the computing system changes display of the two or more application windows within the at least one display screen of the corresponding at least one display device from the current window layout to the first window layout. Changing display of the two or more application windows is performed without receiving, from a user, user input manually changing individual application windows among the two or more application windows.

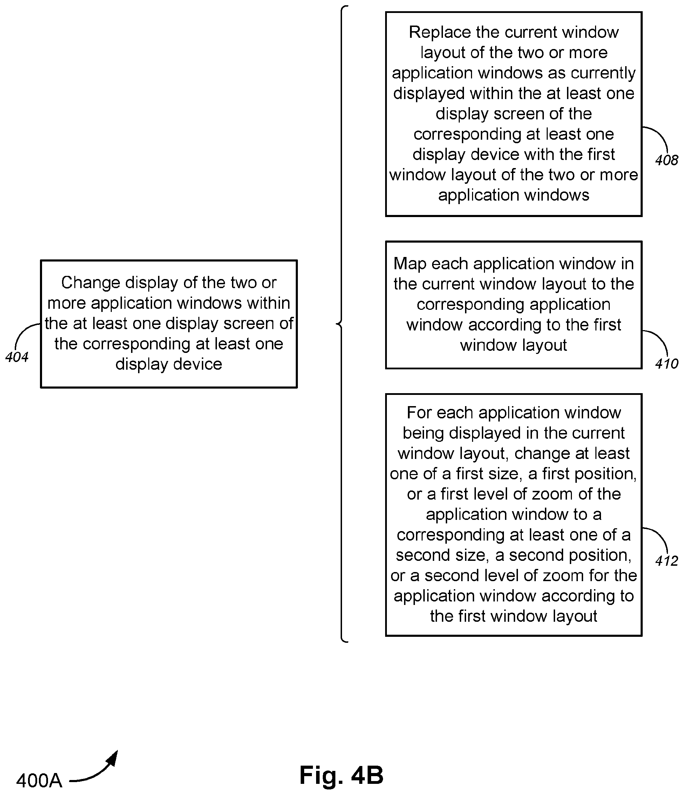

Referring to Fig. 4B, in an example, changing display of the two or more application windows (at operation 404) includes replacing the current window layout of the two or more application windows as currently displayed within the at least one display screen of the corresponding at least one display device with the first window layout of the two or more application windows (at operation 408). In another example, changing display of the two or more application windows (at operation 404) includes mapping each application window in the current window layout to the corresponding application window according to the first window layout (at operation 410). In yet another example, changing display of the two or more application windows (at operation 404) includes, for each application window being displayed in the current window layout, changing at least one of a first size, a first position, or a first level of zoom of the application window to a corresponding at least one of a second size, a second position, or a second level of zoom for the application window according to the first window layout (at operation 412).

Turning back to Fig. 4A, method 400A either continues onto the process at 406 or continues onto one or more of the processes at operations 464-470 in Fig. 4H, following the circular marker denoted, "A." At operation 406 (in Fig. 4A), method 400A includes collecting data regarding at least one of window positioning, window sizing, window layering, window layout, window tiling, titles of application windows, types of applications displayed in the application windows, content of applications, content of application windows, or a number of monitors used, correlated with at least one of user, type of user, task, time-of-day, monitor setup, computing system setup, number of task switches, or number of window layout changes. In examples, the first window layout is an optimal or preferred window layout as determined based on one or more factors. In some examples, the one or more factors include at least one of a user identifier, a type of user, a user task, a number of display devices among the at least one display device, a size of display screen for each display device, or a number of application windows.

With reference to Fig. 4C, method 400B includes, in response to a trigger event, identifying a first window layout of a plurality of application windows for display within at least one display screen of corresponding at least one display device (at operation 414). At operation 416, method 400B includes displaying the plurality of application windows within the at least one display screen of the corresponding at least one display device, based on the first window layout, without receiving, from a user, user input manually changing any of sizes, positions, or levels of zoom of any individual application windows being displayed. Method 400B continues onto one or more of the processes at operations 464-470 in Fig. 4H, following the circular marker denoted, "A," as described above.

Turning to Fig. 4D, method 400C, at operation 418, includes collecting data regarding use and layout of application windows that are displayed within at least one display screen of corresponding at least one display device. At operation 420, method 400C includes in response to a trigger event, identifying at least one first window layout of a plurality of application windows based on analysis of the collected data. Method 400C further includes, at operation 422, displaying the plurality of application windows within the at least one display screen of the corresponding at least one display device, based on the first window layout. In some examples, displaying the plurality of application windows is performed without receiving, from a user, user input manually changing any of sizes, positions, or levels of zoom of any individual application windows being displayed. Method 400C continues onto one or more of the processes at operations 464-470 in Fig. 4H, following the circular marker denoted, "A," as described above.

With reference to Fig. 4E, method 400D, at operation 424, includes, in response to a trigger event, collecting or identifying first context signals, the first context signals including at least one of content, topic, subject, or domain of an open application window among a plurality of application windows that is displayed within at least one display screen of corresponding at least one display device. In this manner, the system is able to delve deeper into what types of information the application window is displaying based on its content, its topic, its subject, and/or its domain, which may be collected or identified as follows. In an example, collecting or identifying the first context signals further includes inferring the content of the open application window from one or more of a document title of the open application window, a uniform resource identifier ("URI") of a resource that is displayed in the open application window, or a uniform resource locator ("URL") of the resource that is displayed in the open application window. In some instances, a language model ("LM") may be used to take as input the document title, the URI, and/or the URL to summarize or categorize its topic, subject, or domain, and based on resultant summary or categorization, the LM may infer the content or type of content.

In another example, collecting or identifying the first context signals further includes, based on a determination that the system has access to full content contained in an application that is displayed in the open application window, extracting the full content from the application. For instance, the application or system that is used to provide window layout suggestions is developed or published by the same developer or service provider as a web browser or a document processing application, whose application window is one of the plurality of application windows discussed above. In such cases, the system may be provided with access to the full content in the web browser or the document processing application via the developer or service provider's interoperability protocols or other information or access sharing protocols.

In yet another example, collecting or identifying the first context signals further includes performing optical character recognition ("OCR") of one or more of title, content, or URI that is displayed in the open application window. In some instances, OCR may be performed on a full or partial screen capture, with mapping between locations of recognized characters from the full or partial screen capture and corresponding locations on an image corresponding to the full or partial screen capture to enable matching between the recognized characters and corresponding application window as shown in the image. The recognized characters may be inputted in a prompt to an LM to determine content or summary of content. Privacy concerns may be alleviated at least to an extent with the use of a local model, where data remains on the device.

In still another example, collecting or identifying the first context signals further includes extracting the at least one of content, topic, subject, or domain from the open application window. The extracted at least one of content, topic, subject, or domain is converted into feature sets, and the feature sets are provided as input to the ML model. In another example, collecting or identifying the first context signals further includes extracting at least one of elements, attributes, or content from a document object model ("DOM") tree of a document that is displayed in the open application window. The DOM tree is a hierarchical representation of the document, with a root node corresponding to the document itself and a series of child nodes that represent at least one of elements, attributes, or content of the document, and represents another source from which context signals may be acquired. Although particular sources of context signals are described above, other sources not specifically referred to herein may also be used. Any source of data that can be used to infer or correlate with use and layout of application windows may be used in a manner similar to that described herein for the particular sources described above.

At operation 426, method 400D includes providing the first context signals as input to an ML model that has been trained to provide window layout suggestions based on a plurality of combinations of context signals. In some examples, the ML model is a neural network model including one of a CNN model, an RNN, or a DNN. The ML model is a local ML model that is trained and optimized local to the system, using the collected or identified context signals.

Method 400D further includes, at operation 428, receiving, as output from the ML model, windowing suggestions for at least one window layout for a plurality of application windows based on the first context signals. In an example, method 400D further includes displaying the windowing suggestions for the at least one window layout for the plurality of application windows (at operation 430). Alternatively or additionally, method 400D further includes autonomously selecting a first window layout among the at least one window layout (at operation 432), and displaying the plurality of application windows within the at least one display screen of the corresponding at least one display device, based on the first window layout (at operation 434). Method 400D continues onto one or more of the processes at operations 464-470 in Fig. 4H, following the circular marker denoted, "A," as described above.

In examples, method 400D further includes identifying two or more application windows among the plurality of application windows having at least one of common or related content, common or related topic, common or related subject, or common or related domain. Method 400D further includes grouping the two or more application windows within the at least on display screen, based on the first window layout. For example, the system may identify a browser displaying a first webpage containing a cookie recipe, a second webpage containing a video of someone making cookies, and a third webpage containing information on one of the ingredients, and one of a word processing document, a presentation document, or notetaking application containing a copy of the cookie recipe as well as annotations by the user. Based on extraction of content (e.g., from DOM tree data, from OCR of full or partial screen captures, from full access to the developer's applications, or from inference of content from document title, URI, and/or URL), the system can identify a common or related content, topic, or subject - in this case, cookies, cookie recipes, or baking cookies. In some cases, the system may determine that a specific type of cookie is the subject or topic (e.g., chocolate chip cookie) and that the content reflects descriptions of how to make such cookies, descriptions of ingredients for making such cookies, and/or reviews of the recipe(s) for such cookies. Based on such determination, the system groups the cookie-related application windows together. Where there are application windows related to different types of cookies (e.g., some for chocolate chip cookies and some for almond cookies), the system identifies which are related to one and which are related to the other, and groups the application windows for one type of cookie together, while grouping the application windows for the other type of cookie in its own group. In the case that the user has a video player application playing a movie in another application window in the same set of displays, the system identifies the differences and similarities, and groups the cookie-related application windows together and separate from the video player application window. The window layout is be based on historical use and layout data for the user when baking cookies and/or watching a movie at the same time, subject to layout changes that the user has made.

In some examples, the context signals further include at least one of window positioning, window sizing, window layering, window layout, window tiling, titles of application windows, types of applications displayed in the application windows, content of applications, content of application windows, or a number of monitors used, correlated with at least one of user, type of user, task, time-of-day, monitor setup, computing system setup, number of task switches, number of window layout changes, or user location. In examples, the context signals further include at least one of dwell time of layout of application windows, metadata of application windows, or a list of top x-number of open application windows by z-order of the open application windows. The dwell time of the layout of an application window refers to how long after the window layout has been displayed before the user makes changes to the layout. A sufficiently high dwell time (e.g., on the order of 10's of minutes, or even an hour or more) may be indicative of a user's acceptance or even preference of the current window layout, and the dwell time or such inference may be captured and stored in the collected data or the context signals. In examples, metadata may include time stamp, application ID, application window ID, title of application window, process name, process ID, and the like. Z-order, as used herein, refers to an indication of an application window's position in a stack of overlapping windows.

In some examples, a combination of context signals may be used to infer or identify routines of a user, such as in the context of how the user prefers application windows to be laid out. For instance, based on user location information indicating the user is at the office and based on calendar information not indicating that the user is out-of-office, the system may infer that the current window layout corresponds to a work-related task. Based on user location information indicating the user is at the office and based on calendar information indicating that the user should be in a video conference (perhaps also based on the system identifying use of a video conferencing application), the system may infer that the current window layout corresponds to an office-based video meeting-related task. The window layout for the office-based video meeting-related task may differ in the case the video conference is taken at the user's home, in some cases, due to different numbers of monitors, different models of monitors, different docks, or other system setup differences. In some cases, user location may be inferred from the system clock, which is synchronized to a network clock of a network with which it is connected, or from a global navigation satellite system ("GNSS") signal (if the system has access to such capability).

Referring to Fig. 4F, method 400E, at operation 436, includes, in response to triggering of a launch operation for an application, calling one or a series of AI models to identify at least one window layout for a plurality of application windows for display within at least one display screen of corresponding at least one display device. The plurality of application windows includes at least one application window associated with the application being launched. In examples, identifying the at least one window layout is further based on collected data regarding historical use and layout of application windows displayed within the at least one display screen for the application or for similar types of applications. Method 400E further includes, at operation 438, displaying the plurality of application windows within the at least one display screen of the corresponding at least one display device, based on a first window layout among the at least one window layout. In some examples, displaying the plurality of application windows within the at least one display screen of the corresponding at least one display device (at operation 438) includes opening the at least one application window associated with the application being launched (at operation 440). At operation 442, the at least one application window is displayed within the at least one display screen, either in relation to already open application windows or overlayed over the already open application windows, based on the first window layout. Method 400E either continues onto the process at operation 444 or continues onto one or more of the processes at operations 464-470 in Fig. 4H, following the circular marker denoted, "A," as described above.

For example, based on collected data (including historical use and layout data) for the user, when doing research, the user tends to word processor document A filling a left half of the screen of a right display device in a two-monitor setup, with document B being duplicated and arranged one above the other on the right half of the screen of the right display device (as shown, e.g., in smart window layout 205e in Fig. 2A), and with .pdf reference documents being arranged in a cascading windows manner in the screen of a left display device in the two-monitor setup (as shown, e.g., in smart window layout 205s in Fig. 2D). If the calendar or research list indicates that the user is continuing to work on Research Project Y, whose working documents are accessible on Shared Drive X, then on launch of the word processor application, the system prompts the AI model using such collected data as part of the input. In response to receiving the suggested window layout (in this case, smart window layout 205e as shown in Fig. 2A) as output, the system accesses documents A and B from Shared Drive X, and implements the display of documents A and B in the screen of the right display device, based on smart window layout 205e. Similarly, upon launch of the .pdf application, the system prompts the AI model using such collected data as part of the input. In response to receiving the suggested window layout (in this case, smart window layout 205s as shown in Fig. 2D) as output, the system accesses a set of .pdf reference documents that are marked as "review incomplete" or the like from Shared Drive X, and implements the display of .pdf reference documents in the screen of the left display device, based on smart window layout 205s. Alternatively, upon startup or login of the computing system, these processes may be combined, such that the user need not even launch each of these applications; they launch automatically based on additional context signals (e.g., calendar indicating that Research Project Y is due within the week and that time and date indicating working hours on a work day). In this manner, the user need only login in or boot their computer, and the smart window layouts 205e and 205s on the screens of the right and left display devices would be automatically implemented, without the user having to manual drag or manipulate each application window to fit these window layouts. Without this functionality, upon launch, the application windows for these two applications would typically be one of randomly sized and positioned, sized and positioned based on system defaults (if any) for each application, or sized and positioned based on use of the previous last application window for each application. Such random, default, or last-use implementations, in most cases, would not be able to achieve most (if not all) smart window layouts 205a-205x as shown in Figs. 2A-2D, e.g., smart window layouts 205e or 205s in this example.

At operation 444, method 400E includes collecting or identifying context data regarding the at least one application window. In examples, the context data includes at least one of dwell time of layout of the at least one application window, window layout changes involving the at least one application window, or use of the at least one application window. In some cases, the window layout changes include changes in one or more of window positioning, window sizing, level of zoom, position relative to other open application windows, or change in z-order of open application windows. Method 400E, at operation 446, includes determining whether the layout of the at least one application window has changed within a threshold period (e.g., minutes or hours). Based on a determination that layout of the at least one application window has not changed within a threshold period, method 400E continues onto the process at operation 448. At operation 448, either historical use and layout data or at least one AI model is updated to reinforce preference of the first window layout with respect to the at least one application window. Based on a determination that layout of the at least one application window has changed to a second window layout within the threshold period, method 400E continues onto the process at operation 450. At operation 450, either the historical use and layout data or the at least one AI model is updated to replace the first window layout with respect to the at least one application window to the second window layout with respect to the at least one application window.

Turning to Fig. 4G, method 400F, at operation 452, includes receiving a user prompt requesting to identify or arrange a window layout of application windows based on a user task to be performed involving the application windows. At operation 454, method 400F includes generating, for input into a first LM, an LM prompt based on the user prompt. In some examples, method 400F further includes collecting or identifying context signals associated with one or more application windows that had been displayed within the at least one display screen of the corresponding at least one display device prior to receiving the user prompt. In examples, the context signals includes at least one of window positioning, window sizing, window layering, window layout, window tiling, titles of application windows, types of applications displayed in the application windows, content of applications, content of application windows, or a number of monitors used. In some cases, these context signals are correlated with at least one of user, type of user, task, time-of-day, monitor setup, computing system setup, number of task switches, number of window layout changes, or user location. In some examples, generating the LM prompt (at operation 454) includes adding the context signals. In examples, the LM is located in a local architecture of the system. In some cases, prompts provided as input to the LM include local user data.

Method 400F further includes, at operation 456, receiving, as output from the first LM, windowing suggestions for at least one window layout for a plurality of application windows for facilitating performance of the user task. Method 400F, at operation 458, displaying the windowing suggestions for the at least one window layout for the plurality of application windows. Alternatively or additionally, method 400F further includes autonomously selecting a first window layout among the at least one window layout (at operation 460); and displaying the plurality of application windows within at least one display screen of a corresponding at least one display device, based on the first window layout (at operation 462). Method 400F continues onto one or more of the processes at operations 464-470 in Fig. 4H, following the circular marker denoted, "A," as described above.

Referring to Fig. 4H, in an example, at operation 464, each of methods 400A-400F includes launching, duplicating, or maximizing one or more application windows among the plurality of application windows, based on the first window layout. Alternatively or additionally, in another example, each of methods 400A-400F, at operation 466, includes layering, cascading, stacking, or overlaying two or more application windows among the plurality of application windows over one or more other application windows among the plurality of application windows, based on the first window layout. Alternatively or additionally, each of methods 400A-400F further includes tiling, snapping, or grouping two or more other application windows among the plurality of application windows within the at least one display screen of corresponding at least one display device, based on the first window layout (at operation 468). Alternatively or additionally, in still another example, each of methods 400A-400F further includes, at operation 470, closing or minimizing one or more other currently displayed application windows that are not among the plurality of application windows, based on the first window layout.

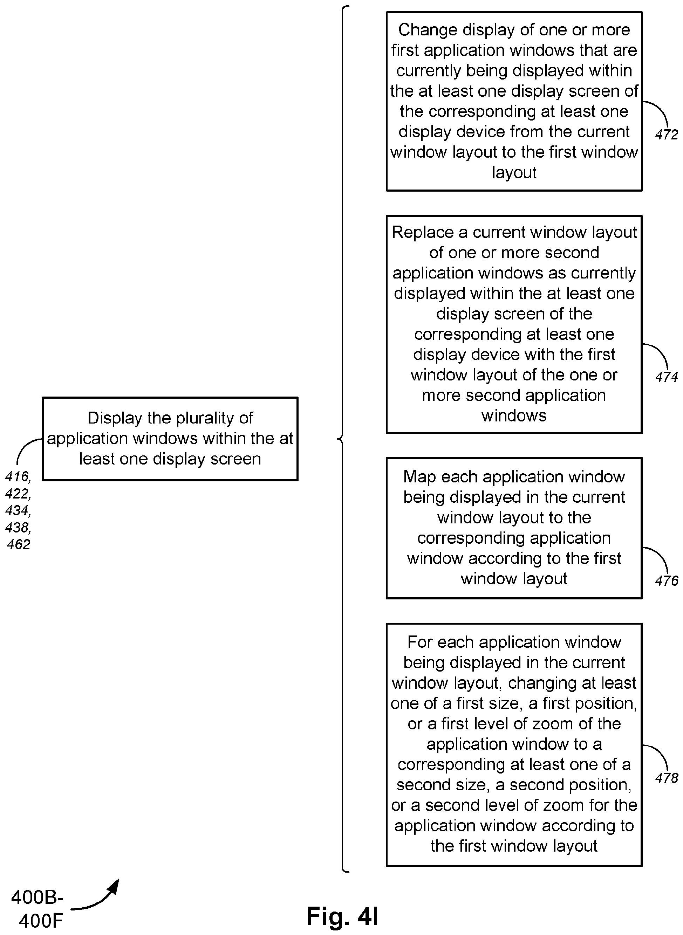

Referring to Fig. 4I, in an example, displaying the plurality of application windows within the at least one display screen (at operation 416, 422, 434, 438, or 462) includes changing display of one or more first application windows that are currently being displayed within the at least one display screen of the corresponding at least one display device from the current window layout to the first window layout (at operation 472). In another example, displaying the plurality of application windows (at operation 416, 422, 434, 438, or 462) includes replacing a current window layout of one or more second application windows as currently displayed within the at least one display screen of the corresponding at least one display device with the first window layout of the one or more second application windows (at operation 474). In yet another example, displaying the plurality of application windows (at operation 416, 422, 434, 438, or 462) includes mapping each application window being displayed in the current window layout to the corresponding application window according to the first window layout (at operation 476). In still another example, displaying the plurality of application windows (at operation 416, 422, 434, 438, or 462) includes, for each application window being displayed in the current window layout, changing at least one of a first size, a first position, or a first level of zoom of the application window to a corresponding at least one of a second size, a second position, or a second level of zoom for the application window according to the first window layout (at operation 478).

In some examples, referring to methods 400A-400F, the trigger events (as referred to in operation 402, 414, 422, or 424) include a user-system interaction-based trigger event and a system change-based trigger event. In an example, the user-system interaction-based trigger event includes one of:
(a) detecting a user logging into a user account;
(b) detecting a user unlocking a locked display screen;
(c) detecting a user launching, closing, duplicating, maximizing, minimizing, or resizing an application window for display, or that is being displayed, within the at least one display screen of the corresponding at least one display device;
(d) detecting a user changing from a first user task to a second user task, each involving one or more application windows for display, or that are being displayed, within the at least one display screen of the corresponding at least one display device; or
(e) receiving a user input, the user input including one of:
   (1) a user input to select from a suggested list of smart window layouts (such as from a topbar or a flyout window);
   (2) a user input to select from one of a saved set of smart window layouts or a frequently used set of smart window layouts;
   (3) a user input to trigger smart window layout functionality; or
   (4) a user input to organize a cluttered desktop environment.

In some examples, the system change-based trigger event including one of:
(A) detecting the system being booted up;
(B) detecting docking or undocking of a laptop computer;
(C) detecting a change from a first monitor setup to a second monitor setup, the second monitor setup having at least one of a second number, a second type, or a second size of monitor that is different from the first monitor setup having a corresponding at least one of a first number, a first type, or a first size of monitor;
(D) detecting tripping of a time-of-day-based trigger;
(E) detecting a cluttered (or disorganized) condition of application windows displayed within the at least one display screen of the corresponding at least one display device (e.g., based on position metadata of the set of application windows indicating random placement, overlays, and/or size of the set of application windows); or
(F) detecting a number of displayed application windows exceeding a threshold number of application windows (which may be a default number set by the developer or a customizable number set by the user).

In examples, identifying the first window layout (at operation 402, 414, or 420) includes utilizing an AI system (e.g., AI system(s) 145 or 170 of Fig. 1) to identify the first window layout. In some instances, the AI system includes at least one of an ML model, a neural network model (e.g., CNN, RNN, or DNN), a transformer model, or a language model (e.g., an SLM or an LLM). In some examples, the trigger event further includes a natural language ("NL") prompt containing a request for a language model to suggest optimal or preferred window layouts. In examples, the AI system utilizes a local ML model that is trained and optimized local to the system, using the collected data (from operation 406, 418, or 444). By using a local ML model that is trained and optimized locally, data security and/or data privacy may be achieved or maintained.

In some aspects, various AI-based implementations may be initiated by the system. In an example, the system uses one or a series of AI models to identify the at least one window layout, by determining topics and features based on NL processing of content within at least one application window by an LM. The system then generates a context signal regarding the content for input into an ML model, and receives, as output from the ML model, windowing suggestions including the at least one window layout for the plurality of application windows. In another example, the system uses one or a series of AI models to identify the at least one window layout, by generating, using the same or another ML model, user preferences in a current context (or in general) regarding window layouts. The system then generates, for input into the same or another LM, an LM prompt requesting windowing suggestions for the current context based on the user preferences, and receives, as output from this LM, windowing suggestions for the current context including the at least one window layout for the plurality of application windows. These and other AI model implementations may be used, in some cases, chaining two or more AI models (whether LM, ML, or otherwise) to perform the various tasks. The various tasks including to flesh out context signals or collected data, to extract content (as well as subject, topic, and/or domain, in some cases) from application windows or their metadata or DOM trees, to identify and suggest window layouts, and/or to implement display of the application windows in a suggested window layout.

While the techniques and procedures in methods 400A-400F are depicted and/or described in a certain order for purposes of illustration, it should be appreciated that certain procedures may be reordered and/or omitted within the scope of various embodiments. Moreover, while the methods 400A-400F may be implemented by or with (and, in some cases, are described below with respect to) the systems, examples, or embodiments 100, 200, and 300 of Figs. 1, 2A-2D, and 3, respectively (or components thereof), such methods may also be implemented using any suitable hardware (or software) implementation. Similarly, while each of the systems, examples, or embodiments 100, 200, and 300 of Figs. 1, 2A-2D, and 3, respectively (or components thereof), can operate according to the methods 400A-400F (e.g., by executing instructions embodied on a computer readable medium), the systems, examples, or embodiments 100, 200, and 300 of Figs. 1, 2A-2D, and 3 can each also operate according to other modes of operation and/or perform other suitable procedures.

As should be appreciated from the foregoing, the present technology provides multiple technical benefits and solutions to technical problems. For instance, one technical problem includes unintended (and sometimes random) changes to layout of application windows displayed on display screens of display devices due to changes in the monitors being used (both in terms of number of monitors as well as the size or resolution of the monitors). Another technical problem may arise from different types of tasks requiring different application window layouts for optimal use by users, thus necessitating manual changes to size, position, and overall layout of a number of application windows. The present technology provides smart window layout functionalities. A computing system, in some cases using an AI system, implements smart window layout, thereby reducing the number of actions a user would take to manually size (or re-size) and position (or re-position) the user's application windows. The system leverages a robust ML model to incorporate meaningful desktop characteristics including available screen real-estate, cross-application relationships/usage correlation, predicted user-intent, and past user windows usage to inform the positioning of application windows being launched and, if applicable, the re-positioning of currently open application windows.

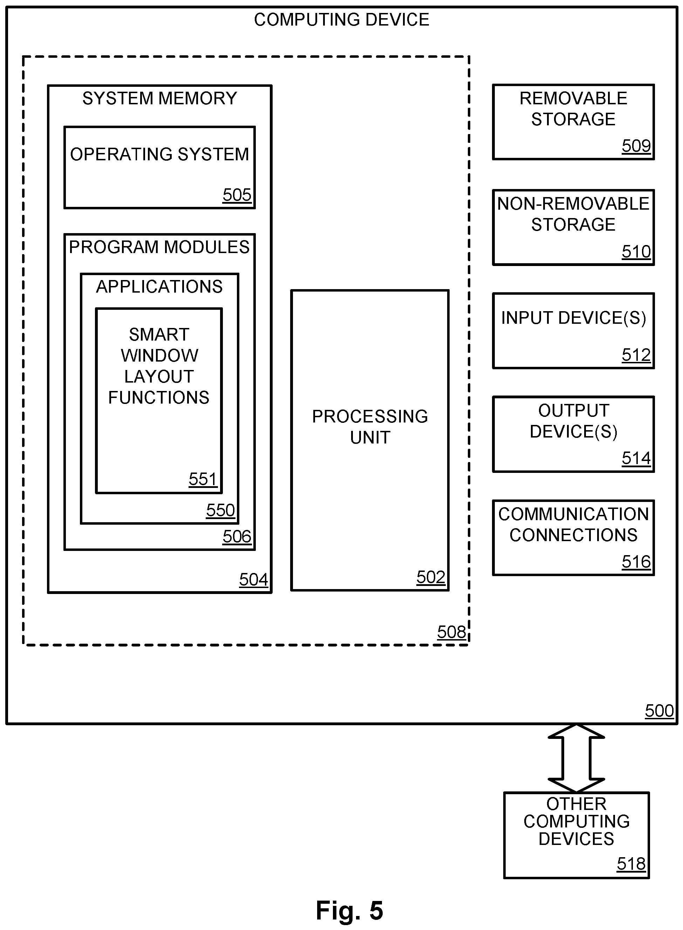

Fig. 5 depicts a block diagram illustrating physical components (i.e., hardware) of a computing device 500 with which examples of the present disclosure may be practiced. The computing device components described below may be suitable for a client device implementing the smart window layout functionalities, as discussed above. In a basic configuration, the computing device 500 may include at least one processing unit 502 and a system memory 504. The processing unit(s) (e.g., processors) may be referred to as a processing system. Depending on the configuration and type of computing device, the system memory 504 may include volatile storage (e.g., random access memory), non-volatile storage (e.g., read-only memory), flash memory, or any combination of such memories. The system memory 504 may include an operating system 505 and one or more program modules 506 suitable for running software applications 550, such as smart window layout functions 551, to implement one or more of the systems or methods described above.

The operating system 505, for example, may be suitable for controlling the operation of the computing device 500. Furthermore, aspects of the invention may be practiced in conjunction with a graphics library, other operating systems, or any other application program and is not limited to any particular application or system. This basic configuration is illustrated in Fig. 5 by those components within a dashed line 508. The computing device 500 may have additional features or functionalities. For example, the computing device 500 may also include additional data storage devices (which may be removable and/or non-removable), such as, for example, magnetic disks, optical disks, or tape. Such additional storage is illustrated in Fig. 5 by a removable storage device(s) 509 and a non-removable storage device(s) 510.

As stated above, a number of program modules and data files may be stored in the system memory 504. While executing on the processing unit 502, the program modules 506 may perform processes including one or more of the operations of the method(s) as illustrated in Figs. 4A-4F, or one or more operations of the system(s) and/or apparatus(es) as described with respect to Figs. 1-3, or the like. Other program modules that may be used in accordance with examples of the present disclosure may include applications such as electronic mail and contacts applications, word processing applications, spreadsheet applications, database applications, slide presentation applications, drawing or computer-aided application programs, AI applications and ML modules on cloud-based systems, etc.

Furthermore, examples of the present disclosure may be practiced in an electrical circuit including discrete electronic elements, packaged or integrated electronic chips containing logic gates, a circuit utilizing a microprocessor, or on a single chip containing electronic elements or microprocessors. For example, examples of the present disclosure may be practiced via a system-on-a-chip ("SOC") where each or many of the components illustrated in Fig. 5 may be integrated onto a single integrated circuit. Such an SOC device may include one or more processing units, graphics units, communications units, system virtualization units and various application functionalities all of which may be integrated (or "burned") onto the chip substrate as a single integrated circuit. When operating via an SOC, the functionality, described herein, with respect to generating suggested queries, may be operated via application-specific logic integrated with other components of the computing device 500 on the single integrated circuit (or chip). Examples of the present disclosure may also be practiced using other technologies capable of performing logical operations such as, for example, AND, OR, and NOT, including, but not limited to, mechanical, optical, fluidic, and/or quantum technologies.

The computing device 500 may also have one or more input devices 512 such as a keyboard, a mouse, a pen, a sound input device, and/or a touch input device, etc. The output device(s) 514 such as a display, speakers, and/or a printer, etc. may also be included. The aforementioned devices are examples and others may be used. The computing device 500 may include one or more communication connections 516 allowing communications with other computing devices 518. Examples of suitable communication connections 516 include, but are not limited to, radio frequency ("RF") transmitter, receiver, and/or transceiver circuitry; universal serial bus ("USB"), parallel, and/or serial ports; and/or the like.

The term "computer readable media" as used herein may include computer storage media. Computer storage media may include volatile and nonvolatile, and/or removable and non-removable, media that may be implemented in any method or technology for storage of information, such as computer readable instructions, data structures, or program modules. The system memory 504, the removable storage device 509, and the non-removable storage device 510 are all computer storage media examples (i.e., memory storage). Computer storage media may include random access memory ("RAM"), read-only memory ("ROM"), electrically erasable programmable read-only memory ("EEPROM"), flash memory or other memory technology, compact disk read-only memory ("CD-ROM"), digital versatile disks ("DVD") or other optical storage, magnetic cassettes, magnetic tape, magnetic disk storage or other magnetic storage devices, or any other article of manufacture which can be used to store information and which can be accessed by the computing device 500. Any such computer storage media may be part of the computing device 500. Computer storage media may be non-transitory and tangible, and computer storage media do not include a carrier wave or other propagated data signal.

Communication media may be embodied by computer readable instructions, data structures, program modules, or other data in a modulated data signal, such as a carrier wave or other transport mechanism, and may include any information delivery media. The term "modulated data signal" may describe a signal that has one or more characteristics that are set or changed in such a manner as to encode information in the signal. By way of example, and not limitation, communication media may include wired media such as a wired network or direct-wired connection, and wireless media such as acoustic, RF, infrared, and other wireless media.

The disclosure presented herein also encompasses the subject matter set forth in the following clauses.

Example Clause A, a system, comprising: a processing system; and memory coupled to the processing system, the memory comprising computer executable instructions that, when executed by the processing system, causes the system to perform operations comprising: in response to a trigger event, collecting or identifying first context signals, the first context signals including at least one of content, topic, subject, or domain of an open application window among a plurality of application windows that is displayed within at least one display screen of corresponding at least one display device; providing the first context signals as input to a machine learning "ML" model that has been trained to provide window layout suggestions based on a plurality of combinations of context signals; receiving, as output from the ML model, windowing suggestions for at least one window layout for a plurality of application windows based on the first context signals; and performing at least one of: displaying the windowing suggestions for the at least one window layout for the plurality of application windows; or autonomously selecting a first window layout among the at least one window layout, and displaying the plurality of application windows within the at least one display screen of the corresponding at least one display device, based on the first window layout.

Example Clause B, the system of Example Clause A, wherein displaying the plurality of application windows within the at least one display screen of the corresponding at least one display device, based on the first window layout, comprises at least one of: changing display of one or more first application windows that are currently being displayed within the at least one display screen of the corresponding at least one display device from the current window layout to the first window layout; replacing a current window layout of one or more second application windows as currently displayed within the at least one display screen of the corresponding at least one display device with the first window layout of the one or more second application windows; mapping each application window being displayed in the current window layout to the corresponding application window according to the first window layout; or for each application window being displayed in the current window layout, changing at least one of a first size, a first position, or a first level of zoom of the application window to a corresponding at least one of a second size, a second position, or a second level of zoom for the application window according to the first window layout.

Example Clause C, the system of Example Clause A, wherein the operations further comprise at least one of: launching, duplicating, or maximizing one or more application windows among the plurality of application windows, based on the first window layout; layering, cascading, stacking, or overlaying two or more application windows among the plurality of application windows over one or more other application windows among the plurality of application windows, based on the first window layout; tiling, snapping, or grouping two or more other application windows among the plurality of application windows within the at least one display screen of corresponding at least one display device, based on the first window layout; or closing or minimizing one or more other currently displayed application windows that are not among the plurality of application windows, based on the first window layout.

Example Clause D, the system of Example Clause A, wherein the operations further comprise: identifying two or more application windows among the plurality of application windows having at least one of common or related content, common or related topic, common or related subject, or common or related domain; and grouping the two or more application windows within the at least on display screen, based on the first window layout.

Example Clause E, the system of Example Clause A, wherein the trigger event includes one of: a user-system interaction-based trigger event including one of: detecting a user logging into a user account; detecting a user unlocking a locked display screen; detecting a user launching, closing, duplicating, maximizing, minimizing, or resizing an application window for display, or that is being displayed, within the at least one display screen of the corresponding at least one display device; detecting a user changing from a first user task to a second user task, each involving one or more application windows for display, or that are being displayed, within the at least one display screen of the corresponding at least one display device; or receiving a user input, the user input including one of: a user input to select from a suggested list of smart window layouts; a user input to select from one of a saved set of smart window layouts or a frequently used set of smart window layouts; a user input to trigger smart window layout functionality; or a user input to organize a cluttered desktop environment; or a system change-based trigger event including one of: detecting the system being booted up; detecting docking or undocking of a laptop computer; detecting a change from a first monitor setup to a second monitor setup, the second monitor setup having at least one of a second number, a second type, or a second size of monitor that is different from the first monitor setup having a corresponding at least one of a first number, a first type, or a first size of monitor; detecting tripping of a time-of-day-based trigger; detecting a cluttered condition of application windows displayed within the at least one display screen of the corresponding at least one display device; or detecting a number of displayed application windows exceeding a threshold number of application windows.

Example Clause F, the system of Example Clause A, wherein the ML model is a neural network model including one of a convolutional neural network "CNN" model, a recurrent neural network "RNN", or a deep neural network "DNN".

Example Clause G, the system of Example Clause F, wherein the ML model is a local ML model that is trained and optimized local to the system, using the collected or identified context signals.

Example Clause H, the system of Example Clause A, wherein the context signals further include at least one of window positioning, window sizing, window layering, window layout, window tiling, titles of application windows, types of applications displayed in the application windows, content of applications, content of application windows, or a number of monitors used, correlated with at least one of user, type of user, task, time-of-day, monitor setup, computing system setup, number of task switches, number of window layout changes, or user location.

Example Clause I, the system of Example Clause A, wherein the context signals further include at least one of dwell time of layout of application windows, metadata of application windows, or a list of top x-number of open application windows by z-order of the open application windows.

Example Clause J, the system of Example Clause A, wherein collecting or identifying the first context signals further comprises at least one of: inferring the content of the open application window from one or more of a document title of the open application window, a uniform resource identifier "URI" of a resource that is displayed in the open application window, or a uniform resource locator "URL" of the resource that is displayed in the open application window; based on a determination that the system has access to full content contained in an application that is displayed in the open application window, extracting the full content from the application; performing optical character recognition "OCR" of one or more of title, content, or URI that is displayed in the open application window; extracting the at least one of content, topic, subject, or domain from the open application window, converting the extracted at least one of content, topic, subject, or domain into feature sets, wherein providing the first context signals as input to the ML model includes providing the feature sets as input to the ML model; or extracting at least one of elements, attributes, or content from a document object model "DOM" tree of a document that is displayed in the open application window.

Example Clause K, a computer-implemented method for smart window layout functionalities, the method comprising: in response to triggering of a launch operation for an application, calling, by a computing system, one or a series of artificial intelligence "AI" models to identify at least one window layout for a plurality of application windows for display within at least one display screen of corresponding at least one display device, the plurality of application windows including at least one application window associated with the application being launched, further based on collected data regarding historical use and layout of application windows displayed within the at least one display screen for the application or for similar types of applications; and displaying, by the computing system, the plurality of application windows within the at least one display screen of the corresponding at least one display device, based on a first window layout among the at least one window layout.

Example Clause L, the computer-implemented method of Example Clause K, wherein the AI models each includes one of a language model "LM" or a machine learning "ML" model, wherein the LM includes one of a small language model "SLM", a large language model "LLM", or other natural language "NL" -based LM, wherein the ML model is a neural network model including one of a convolutional neural network "CNN" model, a recurrent neural network "RNN", or a deep neural network "DNN".

Example Clause M, the computer-implemented method of Example Clause K, wherein displaying the plurality of application windows within the at least one display screen of the corresponding at least one display device, based on the first window layout, comprises: opening, by the computing system, the at least one application window associated with the application being launched, and displaying, by the computing system, the at least one application window within the at least one display screen, either in relation to already open application windows or overlayed over the already open application windows, based on the first window layout.

Example Clause N, the computer-implemented method of Example Clause M, wherein displaying the plurality of application windows within the at least one display screen of the corresponding at least one display device, based on the first window layout, further comprises at least one of: changing display of one or more first application windows that are currently being displayed within the at least one display screen of the corresponding at least one display device from the current window layout to the first window layout; replacing a current window layout of one or more second application windows as currently displayed within the at least one display screen of the corresponding at least one display device with the first window layout of the one or more second application windows; mapping each application window being displayed in the current window layout to the corresponding application window according to the first window layout; or for each application window being displayed in the current window layout, changing at least one of a first size, a first position, or a first level of zoom of the application window to a corresponding at least one of a second size, a second position, or a second level of zoom for the application window according to the first window layout.

Example Clause O, the computer-implemented method of Example Clause K, further comprising at least one of: launching, duplicating, or maximizing one or more application windows among the plurality of application windows, based on the first window layout; layering, cascading, stacking, or overlaying two or more application windows among the plurality of application windows over one or more other application windows among the plurality of application windows, based on the first window layout; tiling, snapping, or grouping two or more other application windows among the plurality of application windows within the at least one display screen of corresponding at least one display device, based on the first window layout; or closing or minimizing one or more other currently displayed application windows that are not among the plurality of application windows, based on the first window layout.

Example Clause P, the computer-implemented method of Example Clause K, further comprising: collecting or identifying, by the computing system, context data regarding the at least one application window, the context data including at least one of dwell time of layout of the at least one application window, window layout changes involving the at least one application window, or use of the at least one application window, wherein the window layout changes include changes in one or more of window positioning, window sizing, level of zoom, position relative to other open application windows, or change in z-order of open application windows; and performing, by the computing system, one of: based on a determination that layout of the at least one application window has not changed within a threshold period, updating either historical use and layout data or at least one AI model to reinforce preference of the first window layout with respect to the at least one application window; or based on a determination that layout of the at least one application window has changed to a second window layout within the threshold period, updating either the historical use and layout data or the at least one AI model to replace the first window layout with respect to the at least one application window to the second window layout with respect to the at least one application window.

Example Clause Q, a system for implementing smart window layout functionalities, the system comprising: a processing system; and memory coupled to the processing system, the memory comprising computer executable instructions that, when executed by the processing system, causes the system to perform operations comprising: receiving a user prompt requesting to identify or arrange a window layout of application windows based on a user task to be performed involving the application windows; generating, for input into a first language model "LM", an LM prompt based on the user prompt; receiving, as output from the first LM, windowing suggestions for at least one window layout for a plurality of application windows for facilitating performance of the user task; and performing at least one of: displaying the windowing suggestions for the at least one window layout for the plurality of application windows; or autonomously selecting a first window layout among the at least one window layout, and displaying the plurality of application windows within at least one display screen of a corresponding at least one display device, based on the first window layout.

Example Clause R, the system of Example Clause Q, wherein displaying the plurality of application windows within the at least one display screen comprises at least one of: changing display of one or more first application windows that are currently being displayed within the at least one display screen of the corresponding at least one display device from the current window layout to the first window layout; replacing a current window layout of one or more second application windows as currently displayed within the at least one display screen of the corresponding at least one display device with the first window layout of the one or more second application windows; mapping each application window being displayed in the current window layout to the corresponding application window according to the first window layout; or for each application window being displayed in the current window layout, changing at least one of a first size, a first position, or a first level of zoom of the application window to a corresponding at least one of a second size, a second position, or a second level of zoom for the application window according to the first window layout.

Example Clause S, the system of Example Clause Q, wherein the operations further comprise: collecting or identifying context signals associated with one or more application windows that had been displayed within the at least one display screen of the corresponding at least one display device prior to receiving the user prompt, the context signals including at least one of window positioning, window sizing, window layering, window layout, window tiling, titles of application windows, types of applications displayed in the application windows, content of applications, content of application windows, or a number of monitors used, correlated with at least one of user, type of user, task, time-of-day, monitor setup, computing system setup, number of task switches, number of window layout changes, or user location; wherein generating the LM prompt includes adding the context signals.

Example Clause T, the system of Example Clause Q, further comprising the LM, wherein the LM is located in a local architecture of the system, wherein prompts provided as input to the LM include local user data.

The systems and methods are provided herein for implementing smart window layout functionalities. In various examples, a computing system may be used to identify a first window layout of a plurality of application windows for display within at least one display screen of corresponding at least one display device. The computing system may display the plurality of application windows within the at least one display screen, based on the first window layout, without receiving, from a user, user input manually changing any of sizes, positions, or levels of zoom of any individual application windows being displayed. The computing system utilizes an artificial intelligence "AI" system and a machine learning "ML" model to perform the identification of the first window layout, and, in some cases, changes the size, position, and/or level of zoom of one or more application windows from an initial layout state based on the first window layout.

In this detailed description, wherever possible, the same reference numbers are used in the drawing and the detailed description to refer to the same or similar elements. In some instances, a sub-label is associated with a reference numeral to denote one of multiple similar components. When reference is made to a reference numeral without specification to an existing sub-label, it is intended to refer to all such multiple similar components. In some cases, for denoting a plurality of components, the suffixes "a" through "n" may be used, where *n* denotes any suitable non-negative integer number (unless it denotes the number 14, if there are components with reference numerals having suffixes "a" through "m" preceding the component with the reference numeral having a suffix "n"), and may be either the same or different from the suffix "n" for other components in the same or different figures. For example, for component #1 X05a-X05n, the integer value of *n* in X05n may be the same or different from the integer value of *n* in X10n for component #2 X10a-X10n, and so on. In other cases, other suffixes (e.g., *s, t, u*, *v, w, x, y,* and/or z) may similarly denote non-negative integer numbers that (together with *n* or other like suffixes) may be either all the same as each other, all different from each other, or some combination of same and different (e.g., one set of two or more having the same values with the others having different values, a plurality of sets of two or more having the same value with the others having different values).

Unless otherwise indicated, all numbers used herein to express quantities, dimensions, and so forth used should be understood as being modified in all instances by the term "about." In this application, the use of the singular includes the plural unless specifically stated otherwise, and use of the terms "and" and "or" means "and/or" unless otherwise indicated. Moreover, the use of the term "including," as well as other forms, such as "includes" and "included," should be considered non-exclusive. Also, terms such as "element" or "component" encompass both elements and components including one unit and elements and components that include more than one unit, unless specifically stated otherwise.

In this detailed description, for the purposes of explanation, numerous specific details are set forth to provide a thorough understanding of the described embodiments. It will be apparent to one skilled in the art, however, that other embodiments of the present invention may be practiced without some of these specific details. In other instances, certain structures and devices are shown in block diagram form. While aspects of the technology may be described, modifications, adaptations, and other implementations are possible. For example, substitutions, additions, or modifications may be made to the elements illustrated in the drawings, and the methods described herein may be modified by substituting, reordering, or adding stages to the disclosed methods. Accordingly, the detailed description does not limit the technology, but instead, the proper scope of the technology is defined by the appended claims. Examples may take the form of a hardware implementation, or an entirely software implementation, or an implementation combining software and hardware aspects. Several embodiments are described herein, and while various features are ascribed to different embodiments, it should be appreciated that the features described with respect to one embodiment may be incorporated with other embodiments as well. By the same token, however, no single feature or features of any described embodiment should be considered essential to every embodiment of the invention, as other embodiments of the invention may omit such features. The detailed description is, therefore, not to be taken in a limiting sense.

Aspects of the present invention, for example, are described above with reference to block diagrams and/or operational illustrations of methods, systems, and computer program products according to aspects of the invention. The functions and/or acts noted in the blocks may occur out of the order as shown in any flowchart. For example, two blocks shown in succession may in fact be executed substantially concurrently or the blocks may sometimes be executed in the reverse order, depending upon the functionalities and/or acts involved. Further, as used herein and in the claims, the phrase "at least one of element A, element B, or element C" (or any suitable number of elements) is intended to convey any of: element A, element B, element C, elements A and B, elements A and C, elements B and C, and/or elements A, B, and C (and so on).

The description and illustration of one or more aspects provided in this application are not intended to limit or restrict the scope of the invention as claimed in any way. The aspects, examples, and details provided in this application are considered sufficient to convey possession and enable others to make and use the best mode of the claimed invention. The claimed invention should not be construed as being limited to any aspect, example, or detail provided in this application. Regardless of whether shown and described in combination or separately, the various features (both structural and methodological) are intended to be selectively rearranged, included, or omitted to produce an example or embodiment with a particular set of features. Having been provided with the description and illustration of the present application, one skilled in the art may envision variations, modifications, and alternate aspects, examples, and/or similar embodiments falling within the spirit of the broader aspects of the general inventive concept embodied in this application that do not depart from the broader scope of the claimed invention.

## Claims

1. A system (100), comprising:
a processing system (105, 135a, 160); and
memory (135b) coupled to the processing system (105, 135a, 160), the memory (135b) comprising computer executable instructions that, when executed by the processing system (105, 135a, 160), causes the system to perform operations comprising:
in response to a trigger event, collecting or identifying (424) first context signals, the first context signals including at least one of content, topic, subject, or domain of an open application window among a plurality of application windows that is displayed within at least one display screen of corresponding at least one display device;
providing (426) the first context signals as input to a machine learning "ML" model that has been trained to provide window layout suggestions based on a plurality of combinations of context signals;
receiving (428), as output from the ML model, windowing suggestions for at least one window layout for a plurality of application windows based on the first context signals; and
performing at least one of:
displaying (430) the windowing suggestions for the at least one window layout for the plurality of application windows; or
autonomously selecting (432) a first window layout among the at least one window layout, and displaying (434) the plurality of application windows within the at least one display screen of the corresponding at least one display device, based on the first window layout.

2. The system of claim 1, wherein displaying the plurality of application windows within the at least one display screen of the corresponding at least one display device, based on the first window layout, comprises at least one of:
changing display of one or more first application windows that are currently being displayed within the at least one display screen of the corresponding at least one display device from the current window layout to the first window layout;
replacing a current window layout of one or more second application windows as currently displayed within the at least one display screen of the corresponding at least one display device with the first window layout of the one or more second application windows;
mapping each application window being displayed in the current window layout to the corresponding application window according to the first window layout; or
for each application window being displayed in the current window layout, changing at least one of a first size, a first position, or a first level of zoom of the application window to a corresponding at least one of a second size, a second position, or a second level of zoom for the application window according to the first window layout.

3. The system of claim 1 or 2, wherein the operations further comprise at least one of:
launching, duplicating, or maximizing one or more application windows among the plurality of application windows, based on the first window layout;
layering, cascading, stacking, or overlaying two or more application windows among the plurality of application windows over one or more other application windows among the plurality of application windows, based on the first window layout;
tiling, snapping, or grouping two or more other application windows among the plurality of application windows within the at least one display screen of corresponding at least one display device, based on the first window layout; or
closing or minimizing one or more other currently displayed application windows that are not among the plurality of application windows, based on the first window layout.

4. The system of any of claims 1-3, wherein the operations further comprise:
identifying two or more application windows among the plurality of application windows having at least one of common or related content, common or related topic, common or related subject, or common or related domain; and
grouping the two or more application windows within the at least on display screen, based on the first window layout.

5. The system of any of claims 1-4, wherein the trigger event includes one of:
a user-system interaction-based trigger event including one of:
detecting a user logging into a user account;
detecting a user unlocking a locked display screen;
detecting a user launching, closing, duplicating, maximizing, minimizing, or resizing an application window for display, or that is being displayed, within the at least one display screen of the corresponding at least one display device;
detecting a user changing from a first user task to a second user task, each involving one or more application windows for display, or that are being displayed, within the at least one display screen of the corresponding at least one display device; or
receiving a user input, the user input including one of:
a user input to select from a suggested list of smart window layouts;
a user input to select from one of a saved set of smart window layouts or a frequently used set of smart window layouts;
a user input to trigger smart window layout functionality; or
a user input to organize a cluttered desktop environment; or
a system change-based trigger event including one of:
detecting the system being booted up;
detecting docking or undocking of a laptop computer;
detecting a change from a first monitor setup to a second monitor setup, the second monitor setup having at least one of a second number, a second type, or a second size of monitor that is different from the first monitor setup having a corresponding at least one of a first number, a first type, or a first size of monitor;
detecting tripping of a time-of-day-based trigger;
detecting a cluttered condition of application windows displayed within the at least one display screen of the corresponding at least one display device; or
detecting a number of displayed application windows exceeding a threshold number of application windows.

6. The system of any of claims 1-5, wherein the ML model is a neural network model including one of a convolutional neural network "CNN" model, a recurrent neural network "RNN", or a deep neural network "DNN", wherein the ML model is a local ML model that is trained and optimized local to the system, using the collected or identified context signals.

7. The system of any of claims 1-6, wherein the context signals further include at least one of window positioning, window sizing, window layering, window layout, window tiling, titles of application windows, types of applications displayed in the application windows, content of applications, content of application windows, or a number of monitors used, correlated with at least one of user, type of user, task, time-of-day, monitor setup, computing system setup, number of task switches, number of window layout changes, or user location.

8. The system of any of claims 1-7, wherein the context signals further include at least one of dwell time of layout of application windows, metadata of application windows, or a list of top x-number of open application windows by z-order of the open application windows.

9. The system of any of claims 1-8, wherein collecting or identifying the first context signals further comprises at least one of:
inferring the content of the open application window from one or more of a document title of the open application window, a uniform resource identifier "URI" of a resource that is displayed in the open application window, or a uniform resource locator "URL" of the resource that is displayed in the open application window;
based on a determination that the system has access to full content contained in an application that is displayed in the open application window, extracting the full content from the application;
performing optical character recognition "OCR" of one or more of title, content, or URI that is displayed in the open application window;
extracting the at least one of content, topic, subject, or domain from the open application window, converting the extracted at least one of content, topic, subject, or domain into feature sets, wherein providing the first context signals as input to the ML model includes providing the feature sets as input to the ML model; or
extracting at least one of elements, attributes, or content from a document object model "DOM" tree of a document that is displayed in the open application window.

10. A computer-implemented method (400E) for smart window layout functionalities, the method comprising:
in response to triggering of a launch operation for an application, calling (436), by a computing system, one or a series of artificial intelligence "AI" models to identify at least one window layout for a plurality of application windows for display within at least one display screen of corresponding at least one display device, the plurality of application windows including at least one application window associated with the application being launched, further based on collected data regarding historical use and layout of application windows displayed within the at least one display screen for the application or for similar types of applications; and
displaying (438), by the computing system, the plurality of application windows within the at least one display screen of the corresponding at least one display device, based on a first window layout among the at least one window layout.

11. The computer-implemented method of claim 10, wherein the AI models each includes one of a language model "LM" or a machine learning "ML" model, wherein the LM includes one of a small language model "SLM", a large language model "LLM", or other natural language "NL" -based LM, wherein the ML model is a neural network model including one of a convolutional neural network "CNN" model, a recurrent neural network "RNN", or a deep neural network "DNN".

12. The computer-implemented method of claim 10 or 11, wherein displaying the plurality of application windows within the at least one display screen of the corresponding at least one display device, based on the first window layout, comprises:
opening, by the computing system, the at least one application window associated with the application being launched, and displaying, by the computing system, the at least one application window within the at least one display screen, either in relation to already open application windows or overlayed over the already open application windows, based on the first window layout.

13. The computer-implemented method of any of claims 10-12, further comprising:
collecting or identifying, by the computing system, context data regarding the at least one application window, the context data including at least one of dwell time of layout of the at least one application window, window layout changes involving the at least one application window, or use of the at least one application window, wherein the window layout changes include changes in one or more of window positioning, window sizing, level of zoom, position relative to other open application windows, or change in z-order of open application windows; and
performing, by the computing system, one of:
based on a determination that layout of the at least one application window has not changed within a threshold period, updating either historical use and layout data or at least one AI model to reinforce preference of the first window layout with respect to the at least one application window; or
based on a determination that layout of the at least one application window has changed to a second window layout within the threshold period, updating either the historical use and layout data or the at least one AI model to replace the first window layout with respect to the at least one application window to the second window layout with respect to the at least one application window.

14. A system (100) for implementing smart window layout functionalities, the system (100) comprising:
a processing system (105, 135a, 160); and
memory (135b) coupled to the processing system (105, 135a, 160), the memory (135b) comprising computer executable instructions that, when executed by the processing system (105, 135a, 160), causes the system to perform operations comprising:
receiving (452) a user prompt requesting to identify or arrange a window layout of application windows based on a user task to be performed involving the application windows;
generating (454), for input into a first language model "LM", an LM prompt based on the user prompt;
receiving (456), as output from the first LM, windowing suggestions for at least one window layout for a plurality of application windows for facilitating performance of the user task; and
performing at least one of:
displaying (458) the windowing suggestions for the at least one window layout for the plurality of application windows; or
autonomously selecting (460) a first window layout among the at least one window layout, and displaying (462) the plurality of application windows within at least one display screen of a corresponding at least one display device, based on the first window layout.

15. The system of claim 14, wherein the operations further comprise:
collecting or identifying context signals associated with one or more application windows that had been displayed within the at least one display screen of the corresponding at least one display device prior to receiving the user prompt, the context signals including at least one of window positioning, window sizing, window layering, window layout, window tiling, titles of application windows, types of applications displayed in the application windows, content of applications, content of application windows, or a number of monitors used, correlated with at least one of user, type of user, task, time-of-day, monitor setup, computing system setup, number of task switches, number of window layout changes, or user location;
wherein generating the LM prompt includes adding the context signals.
